**Europäisches Patentamt**

**European Patent Office**

**Office européen des brevets**

(19)

(11) Numéro de publication: **0 236 650**
**B1**

(12) # FASCICULE DE BREVET EUROPEEN

(45) Date de publication du fascicule du brevet:
**14.03.90**

(21) Numéro de dépôt: **86402971.5**

(22) Date de dépôt: **31.12.86**

(51) Int. Cl.⁴: **F16H 1/445,** B60K 17/16

(54) **Dispositif d'entraînement de deux arbres alignés, avec mécanisme différentiel, notamment deux arbres de transmission reliés à deux roues arrière de véhicule.**

(30) Priorité: **24.01.86 FR 8601039**

(43) Date de publication de la demande:
**16.09.87 Bulletin 87/38**

(45) Mention de la délivrance du brevet:
**14.03.90 Bulletin 90/11**

(84) Etats contractants désignés:
**DE GB IT**

(56) Documents cités:
**EP-A- 0 068 309**
**EP-A- 0 164 544**
**DE-A- 1 910 275**
**DE-C- 466 787**
**FR-A- 2 318 351**
**US-A- 1 658 571**
**US-A- 2 548 258**
**US-A- 2 631 475**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Froumajou, Armand, 11 Bis, rue Dr. Laennec,
F-95520 Osny(FR)**

(74) Mandataire: **Bressand, Georges et al, c/o CABINET
LAVOIX 2 Place d'Estienne d'Orves, F-75441 Paris
Cédex 09(FR)**

## Description

La présente invention a pour objet un dispositif d'entraînement de deux arbres alignés, tels que deux arbres de transmission reliés à deux roues arrière d'un véhicule, du type comprenant un mécanisme différentiel dont une pièce maîtresse formant boîtier, et ainsi désignée ci-après, est solidaire en rotation d'une roue dentée entraînée par un pignon d'un arbre d'entrée. Un dispositif de ce type est connu par EP-A 164 544.

Le mécanisme différentiel est soit mécanique, avec deux pignons planétaires respectivement solidaires des deux arbres entraînés et deux pignons satellites portés par le boîtier, soit du type dit visqueux avec des disques juxtaposés dans le boîtier empli de liquide, des disques solidaires du boîtier alternant avec des disques respectivement solidaires de l'un ou de l'autre des deux arbres entraînés.

Le dispositif étant contenu dans un carter qui le porte au moyen de paliers, les opérations de montage et de démontage sont généralement difficiles à cause de la solidarisation desdits boîtiers et roue dentée, ceux-ci constituant, une fois assemblés hors du carter, un ensemble volumineux délicat à mettre en place, surtout si l'engrenage entre la roue dentée et le pignon associé est conique. Cette difficulté constitue un inconvénient dans le cas de l'entraînement des roues arrière d'un véhicule, où la dépose éventuelle du différentiel implique celle, parfois inutile et souvent malaisée, de la roue dentée.

L'invention a pour but de réaliser un dispositif entraînant deux arbres alignés au moyen d'un mécanisme différentiel aisément amovible ou interchangeable.

Suivant l'invention, le dispositif comporte, pour réaliser cette solidarisation, des moyens de crabotage entre la roue dentée préalablement mise en place dans le carter, et ledit boîtier introduit dans ce dernier, coaxialement aux arbres alignés, par une ouverture latérale du carter.

Selon d'autres caractéristiques avantageuses :
- le mécanisme différentiel étant du type visqueux, à disques solidaires du boîtier alternant avec des disques solidaires de l'un ou l'autre des deux arbres entraînés, ces derniers disques sont portés respectivement par deux manchons juxtaposés axialement, engagés l'un dans l'autre de façon étanche et libre en rotation et accouplés chacun à l'un des deux arbres entraînés, tandis que les moyens de crabotage comportent une couronne dentée ou encochée solidaire du boîtier et engagée dans une denture complémentaire formée sur la roue dentée;
- le mécanisme différentiel étant mécanique, son boîtier portant des pignons satellites qui coopèrent avec deux pignons planétaires respectivement accouplés à chacun des deux arbres entraînés, les moyens de crabotage comprennent un manchon baladeur porté par le boîtier et mobile axialement sur celui-ci d'une position d'accouplement à une position de dégagement de moyens de crabotage entre la roue dentée et le manchon baladeur;
- dans ce dernier cas, des moyens de crabotage supplémentaires peuvent être prévus entre le manchon baladeur et une pièce ancrée sur l'un des arbres entraînés, ces moyens étant susceptibles d'être accouplés dans une position du manchon correspondant à son crabotage avec la roue dentée, de manière à assurer le blocage du différentiel.

Trois exemples de réalisation d'un dispositif d'entraînement selon l'invention sont décrits ci-après, avec référence aux dessins annexés sur lesquels :

- la Figure 1 est une vue en coupe axiale d'un premier mode de réalisation d'un dispositif d'en traînement selon l'linvention, avec mécanisme différentiel visqueux;
- les Figures 2 et 3 sont des vues analogues de dispositifs selon un second et un troisième modes de réalisation, avec mécanisme différentiel mécanique;
- et la Figure 4 est une vue en coupe suivant IV-IV de la Figure 2 d'un détail du second mode de réalisation.

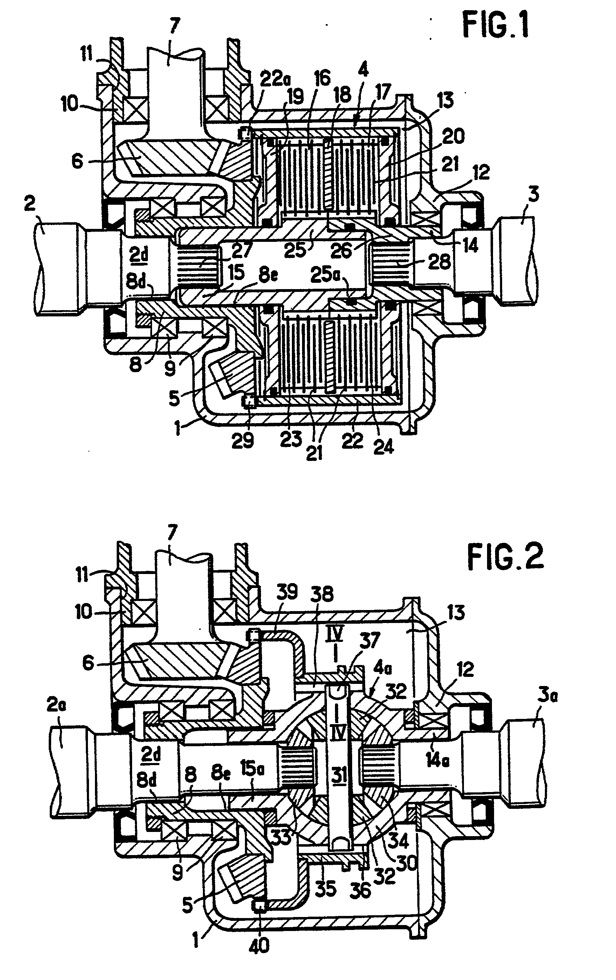

On voit sur les Figures 1 à 3, monté dans un carter 1, un dispositif d'entraînement de deux arbres alignés 2, 3 ou 2a, 3a ou 2b, 3b comprenant un mécanisme différentiel 4, 4a, 4b solidaire en rotation d'une roue dentée 5 coopérant avec un pignon 6 d'un arbre d'entrée 7. Les deux arbres alignés sont par exemple reliés respectivement à deux roues arrière d'un véhicule automobile, et l'arbre 7 est alors un arbre de transmission entraîné par le moteur du véhicule.

L'arbre 7 étant perpendiculaire aux deux arbres alignés 2, 3; 2a, 3a; 2b, 3b, l'engrenage de la roue 5 et du pignon 6 est conique. La roue 5 est solidaire d'un moyeu tubulaire 8 tournant librement dans un palier 9 à deux roulements, et l'arbre 7 est porté par un palier 10 engagé et fixé dans une ouverture appropriée 11 du carter 1. L'arbre 2, 2a, 2b est porté par le moyeu 8, sa portion 2d tournant librement dans une portée intérieure 8d du moyeu. L autre arbre entraîné 3, 3a, 3b est porté indirectement par un palier 12, constituant un couvercle qui ferme une large ouverture laterale 13 du carter 1. L'arbre 3,3a,3b est en fait porté par une portion extrême 14,14a,14b du mécanisme différentiel, elle-même portée par le palier 12, tandis qu'une portion extrême opposée 15,15a,15b de ce mécanisme est portée par le moyeu 8 en tournant librement dans une portée intérieure 8e de ce moyeu.

Dans le premier mode de réalisation (Figure 1), le mécanisme différentiel 4 est du type visqueux, comportant, dans deux chambres annulaires 16,17 séparées par une cloison radiale 18 et délimitées axialement par deux flasques 19, 20 un empilage de disques 21 solidaires d'un tambour extérieur 22 alternant avec des disques 23, 24 respectivement solidaires, dans la chambre 16, d'un manchon intérieur 25, et dans la chambre 17, d'un manchon intérieur 26. Ces manchons 25, 26 sont reliés, au droit de la cloison 18, par engagement coulissant et étanche d'un embout extrême 25a de l'un 25 dans un alésage extérieur de l'autre 26, tandis que leurs extrémités opposées constituent respectivement les susdites portions 15, 14, celles-ci étant de plus accouplées par des cannelures 27, 28 l'une à l'arbre 2 et l'autre à l'arbre 3.

Les deux flasques 19, 20 tournent librement et de façon étanche sur les deux manchons 25, 26 et constituent autour de ceux-ci, avec le tambour 22, un boîtier tournant en bloc avec la roue dentée 5.

A cet effet, l'extrémité du tambour 22 tournée vers la roue 5 est munie sur toute sa circonférence d'encoches 22a crabotant avec une denture 29 complémentaire formée sur la roue 5. La couronne encochée ainsi formée à l'extrémité du tambour 22 pourrait en variante être remplacée par une couronne dentée, par exemple fixée à cette extrémité. Dans tous les cas, le moyen de crabotage 29, 22a ainsi réalisé est engageable par coulissement axial du boîtier 19, 20, 22, ce qui est compatible avec un montage aisé, par l'ouverture 13,du mécanisme différentiel 4 préalablement assemblé sur les deux manchons 25, 26.

Dans le second mode de réalisation (Figure 2), le mécanisme différentiel 4a est du type mécanique, comprenant un boîtier sensiblement sphérique 30 qui porte au moyen d'un axe 31 deux pignons satellites 32 engrènant avec deux pignons planétaires 33, 34 accouplés respectivement à chacun des arbres 2a et 3a. Le boîtier 30 comporte deux embouts tubulaires constituant les susdites portions extrêmes 14a, 15a portées l'une par le moyeu 8 de la roue 5, l'autre par le palier 12.

Un manchon baladeur 35 coulisse axialement sur une portée cylindrique 36 du boîtier 30, son immobilisation en rotation étant assurée par engagement des extrémités saillantes 37 de l'axe 31 des satellites 32 dans deux rainures diamétralement opposées 38 du manchon 35. Celui-ci est pourvu, à son extrémité tournée vers la roue 5, d'une couronne encochée 39 propre à craboter avec une denture complémentaire 40 de la roue 5. Le moyen de crabotage 39, 40 ainsi réalisé entre le manchon baladeur 35 et la roue 5 est soit accouplé, soit dégagé selon que le manchon 35 est placé, par un moyen de commande usuel non visible sur la Figure 2, dans une première position représentée à la Figure 2, ou dans une seconde position l'éloignant de la roue 5. Celle-ci, toujours en prise avec le pignon 6, n'est reliée aux arbres 2a et 3a par le mécanisme 4a que lorsque le moyen de crabotage 39, 40 est accouplé. Dans le cas de l'application susmentionnée du dispositif à un véhicule, les roues arrière reliées aux arbres 2a et 3a sont ainsi sélectivement motrices ou non.

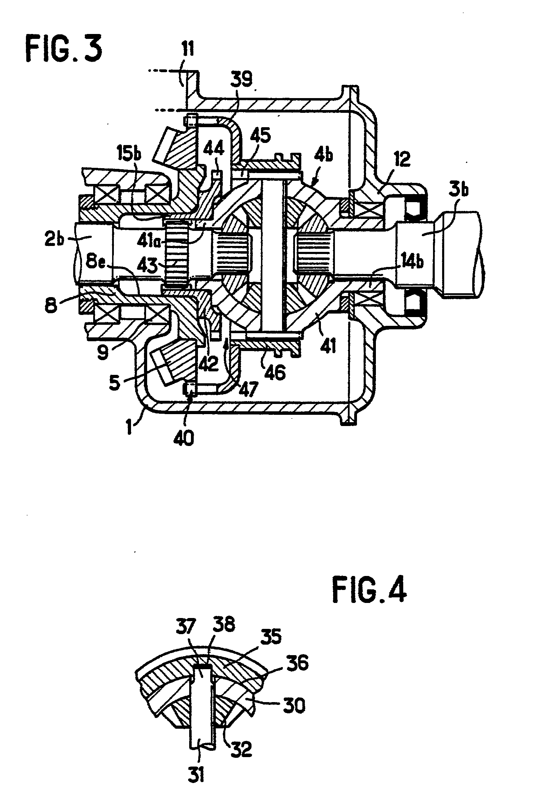

Le troisième mode de réalisation (Figure 3) diffère du précédent par l'interposition, entre le boîtier 41 du différentiel 4b et la roue dentée 5, d'une pièce annulaire 42 ancrée sur l'arbre 2b au moyen de cannelures 43 et munie à sa périphérie d'une denture 44 propre à craboter avec des cannelures internes 45 du manchon baladeur 46, cannelures par lesquelles ce dernier coulisse sur le boîtier 41 dont la périphérie est pourvue de cannelures complémentaires. La pièce 42 comporte un moyeu tubulaire 15b qui constitue la susdite portion extrême, tournant librement sur un embout 41a du boîtier 41 et dans la portée 8e intérieure à la roue 5. Le manchon 46 comporte, comme dans le mode de réalisation précédent, une couronne 39 propre à être accouplée à la roue 5 par un moyen de crabotage constitué par la denture 40.

Les dents 44 et les cannelures 45 constituent des moyens de crabotage supplémentaires 47 destinés à accoupler le boîtier 41 à la pièce 42, donc à l'arbre 2b, "bloquant" ainsi le différentiel, quand le manchon 46 est déplacé vers la gauche, à partir de la position représentée à la Figure 3, les moyens de crabotage 39, 40 restant alors accouplés.

Ainsi, dans le cas précité de l'application du dispositif à un véhicule automobile, et en se reportant à la Figure 3, dans la position représentée du baladeur 46, le moyen de crabotage 39, 40 étant seul accouplé, les roues arrière sont motrices, entraînées par le différentiel fonctionnant normalement. Le baladeur 46 étant déplacé vers la droite, les deux moyens de crabotage 40, 47 étant dégagés, le boîtier 41 n'est plus relié à la roue 5 et les roues arrière ne sont donc plus motrices et tournent de façon indépendante. Le baladeur étant déplacé vers la gauche, les moyens de crabotage 40 et 47 étant tous deux en état d'accouplement, les roues sont motrices, avec blocage du différentiel, c'est-à-dire les deux arbres 2b, 3b tournant en bloc avec le boîtier 41, donc les deux roues tournant à la même vitesse.

Dans une variante non représentée, le crabotage entre un boîtier de différentiel mécanique et la roue dentée 5 s'effectue en permanence, comme dans le premier mode susmentionné. Une couronne encochée en prise avec la denture 40 de la roue 5 est alors fixée audit boîtier, par exemple au moyen d'au moins une vis, celle-ci pouvant être disposée de façon à immobiliser l'axe 31 des satellites.

Dans les divers modes de réalisation décrits, la roue dentée 5 est d'abord mise en place dans le carter 1, son moyeu 8 étant calé dans le palier à roulements 9, puis le mécanisme différentiel 4, 4a, 4b est introduit axialement par l'ouverture 13 du carter 1 jusqu'à engagement de la portion extrême 15, 15a, 15b dans le moyeu 8 de la roue 5. Le palier 12 formant couvercle est fixé au carter 1 au droit de l'ouverture 13, et les arbres entraînés 2,3 ou 2a, 3a ou 2b, 3b sont engagés jusqu'à accouplement de leur extrémité cannelée dans les manchons 25, 26 (Figure 1), ou dans les pignons planétaires 33, 34 (Figures 2 et 3). Le mécanisme différentiel est, par opérations inverses, démontable aisément sans déplacer la roue dentée 5. Il est de plus interchangeable, c'est-à-dire que dans un même carter 1 équipé d'un renvoi conique 5, 6, on peut monter alternativement l'un ou l'autre des mécanismes différentiels décrits.

**Revendications**

1. Dispositif d'entraînement de deux arbres alignés (2, 3; 2a, 3a; 2b, 3b), tels que deux arbres de transmission reliés à deux roues arrière d'un véhicule, comprenant un mécanisme différentiel (4; 4a; 4b) dont une pièce maîtresse formant boîtier (19, 20, 22; 30; 41) logée dans un carter (1) est solidaire en rotation d'une roue dentée (5) entraînée par un pignon (6) d'un arbre d'entrée (7) et mise en place dans le carter (1) avant que le boîtier soit introduit dans ce dernier coaxialement aux arbres alignés (2, 3; 2a, 3a; 2b, 3b) par une ouverture latérale (13) du carter (1), caractérisé en ce que le boîtier est, à son extrémité tournée vers la roue dentée (5), accouplé à celle-ci par des moyens de crabotage, et à son autre extrémité, muni d'une portion extrême (14, 14a, 14b) portée par un palier formant couvercle (12) fixé sur l'ouverture (13) du carter (1).

2. Dispositif selon la revendication 1, caractérisé en ce que, la roue dentée (5) étant solidaire d'un moyeu (8) porté par un palier (9) du carter, le boîtier est muni, du côté de la roue dentée (5), d'une portion extrême (15, 15a, 15b) tournant dans une portée intérieure (8e) de ce moyeu.

3. Dispositif selon la revendication 2, caractérisé en ce que les moyens de crabotage comprennent une couronne encochée (22a, 39) solidaire en rotation du boîtier (19, 20, 22; 30; 41) et une denture complémentaire (29; 40) formée sur la roue dentée (5).

4. Dispositif selon la revendication 3, caractérisé en ce que la couronne encochée (22a) est rigidement solidaire du boîtier (19, 20, 22).

5. Dispositif selon la revendication 3, caractérisé en ce que la couronne encochée (39) est accouplée au boîtier (30, 41) par des moyens coulissants (37, 38; 45, 46).

6. Dispositif selon l'une quelconque des revendications 1 à 4, caractérisé en ce que le mécanisme différentiel étant du type visqueux (4) à disques (21) solidaires du boîtier alternant avec des disques (23-24) soldaires de l'un ou l'autre des deux arbres entraînés (2, 3), ces derniers disques sont portés respectivement par deux manchons (25, 26) juxtaposés axialement, engagés l'un dans l'autre de façon étanche et libre en rotation, et accouplés chacun à l'un des deux arbres entraînés (2, 3), tandis que les moyens de crabotage comportent une couronne dentée ou pourvue d'encoches (22a) solidaire du boîtier (19, 20, 21) et engagée dans une denture complémentaire (29) formée sur la roue dentée (5).

7. Dispositif selon l'une quelconque des revendications 3 ou 5, caractérisé en ce que le mécanisme différentiel étant mécanique (4a), son boîtier (30) portant des pignons satellites (32) qui coopèrent avec deux pignons planétaires (33, 34) respectivement accouplés à chacun des deux arbres entraînés (2a, 3a), les moyens de crabotage comprennent un manchon baladeur (35) porté par le boîtier (30) et mobile axialement sur celui-ci d'une position d'accouplement à une position de dégagement de moyens de crabotage (39, 40) entre la roue dentée (5) et le manchon baladeur (35).

8. Dispositif selon la revendication 7, caractérisé en ce que des moyens de crabotage supplémentaires (47) sont prévus entre le manchon baladeur (46) et une pièce (42) ancrée sur l'un (2b) des arbres entraînés, ces moyens (47) étant susceptibles d'être accouplés dans une position du manchon (46) correspondant à son crabotage avec la roue dentée (5), de manière à assurer le blocage du différentiel.

## Claims

1. A device for driving two shafts mounted in alignment (2, 3; 2a, 3a; 2b, 3b), such as two transmission shafts connected to two rear wheels of a vehicle, in which a differential (4; 4a; 4b) including a main part forming a housing (19, 20, 22; 30; 41) housed in a casing (1) is rigidly secured to a gearwheel (5) driven by a pinion (6) on an input shaft (7) and installed in the casing (1) before the housing is inserted in the latter coaxial to the shafts mounted in alignment (2, 3; 2a, 3a; 2b, 3b) through a side opening (13) in the casing (1), characterised in that the housing is, at its end facing the gearwheel (5), connected to the latter by means of coupling, and at its other end, fitted with an end section (14, 14a, 14b) supported by a bearing forming a cover (12) secured onto the opening (13) in the casing (1).

2. A device as claimed in claim 1, characterised in that, the gearwheel (5) being securely fixed to a hub (8) supported by a bearing (9) on the casing, the housing is provided, at the gearwheel (5) end, with an end piece (15, 15a, 15b) rotating in an internal bearing (8e) in this hub.

3. A device as claimed in claim 2, characterised in that the means of coupling comprises a notched ring (22a, 39) rigidly secured to the housing (19, 20, 22; 30; 41) so as to rotate with it, and complementary teeth (29, 40) formed on the gearwheel (5).

4. A device as claimed in claim 3, characterised in that the notched ring (22a) is rigidly secured to the housing (19, 20, 22).

5. A device as claimed in claim 3, characterised in that the notched ring (39) is connected to the housing (30, 41) by sliding means (37, 38; 45, 46).

6. A device as claimed in any one of claims 1 to 4, characterised in that, the differential being of the viscous type (4) with discs (21) rigidly secured to the housing alternating with discs (23–24) rigidly secured to one or other of the two drive shafts (2, 3), the latter discs are supported respectively by two sleeves (25, 26) placed in line, interlocking together so as to form an impervious seal and to rotate freely, and each connected to one of the drive shafts (2, 3), whilst the means of coupling comprises a ring with teeth or notches (22a) rigidly secured to the housing (19, 20, 21) and engaging with complementary teeth (29) formed on the gearwheel (5).

7. A device as claimed in either of claims 3 or 5, characterised in that the differential being mechanical (4a), its housing (30) supporting differential pinions (32) which mesh with two planetary pinions (33, 34) connected respectively to each of the two drive shafts (2a, 3a), the means of coupling comprise a sliding sleeve (35) supported by the housing (30) and able to move axially on the latter from a position of engagement to a position of disengagement from the means of coupling (39, 40) between the gearwheel (5) and the sliding sleeve (35).

8. A device as claimed in claim 7, characterised in that additional means of coupling (47) are provided between the sliding sleeve (46) and a part (42) anchored to one (2b) of the drive shafts, said means (47) being capable of being connected in a position of the sleeve (46) corresponding to its connection to the gearwheel (55), so as to achieve locking of the differential.

## Patentansprüche

1. Vorrichtung zum Antrieb zweier fluchtender Wellen (2, 3; 2a, 3a; 2b, 3b), insbesondere zweier mit den beiden Hinterrädern eines Fahrzeuges verbundener Achswellen, mit einem Differential (4; 4a; 4b), dessen Hauptteil ein in einem Außengehäuse (1) angeordnetes Innengehäuse (19, 20, 22; 30; 41) bildet, das gemeinsam mit einem durch ein Ritzel (6) einer Antriebswelle (7) angetriebenes Zahnrad (5) drehbar ist, welches vor dem mit den beiden Wellen (2, 3; 2a, 3a; 2b, 3b) koaxialen Einbau des Innengehäuses (19, 20, 22; 30; 41) in das Außengehäuse (1) durch eine seitliche Öffnung (13) des letzteren in dieses einsetzbar ist, dadurch gekennzeichnet, daß das Innengehäuse (19, 20, 22; 30; 41) an seinem dem Zahnrad (5) zugewandten Ende mit diesem diesem Kupplungsorgane verbunden ist und an seinem anderen Ende mit einem vorstehenden Teil (14, 14a, 14b) versehen ist, das von einem Lager gehalten wird, welches eine Abdeckung (12) für die Öffnung (13) des Außengehäuses (1) bildet.

2. Vorrichtung nach Anspruch 1, dadurch gekennzeichnet, daß das Zahnrad (5) mit einer in einem Lager (9) des Außengehäuses (1) gelagerten Nabe (8) versehen ist und das Innengehäuse (19, 20, 22; 30; 41) an seiner dem Zahnrad (5) zugewandten Seite einen vorstehenden Teil (15, 15a, 15b) aufweist, der drehbar in einem von der Nabe (8) gebildeten Lager (8e) geführt ist.

3. Vorrichtung nach Anspruch 2, dadurch gekennzeichnet, daß zu den Kupplungsorganen ein drehfest mit dem Innengehäuse (19, 20, 22; 30; 41) verbundener Nuten- bzw. Zahnkranz (22a, 39) und eine diesem zugeordnete Verzahnung (29; 40) am Zahnrad (5) gehören.

4. Vorrichtung nach Anspruch 3, dadurch gekennzeichnet, daß der Nuten- bzw. Zahnkranz (22a) starr mit dem Innengehäuse (19, 20, 22) verbunden ist.

5. Vorrichtung nach Anspruch 3, dadurch gekennzeichnet, daß der Nuten- bzw. Zahnkranz (39) über Gleitelemente (37, 38; 45, 46) mit dem Innengehäuse (30, 41) verbunden ist.

6. Vorrichtung nach einem der Ansprüche 1 bis 4, dadurch gekennzeichnet, daß das Differential nach Art einer Viskonkupplung (4) ausgebildet ist, bei der mit dem Innengehäuse (19, 20, 22) verbundene Scheiben (21) mit Scheiben (23–24) abwechseln, die mit der einen bzw. der anderen der beiden Wellen (2, 3) verbunden sind, wobei die letzteren Scheiben (23-24) von zwei axial nebeneinander angeordneten Hülsen (25, 26) getragen werden, von denen die eine dicht und drehbeweglich mit der anderen verbunden ist und von denen eine jede mit einer der beiden Wellen (2, 3) gekuppelt ist, während die Kupplungsorgane einen mit Zähnen bzw. Nuten (22a) versehenen Kranz aufweisen, der mit dem Innengehäuse (19, 20, 21) verbunden ist und mit einer Verzahnung (29) am Zahnrad (5) in Eingriff steht.

7. Vorrichtung nach einem der Ansprüche 3 oder 5, dadurch gekennzeichnet, daß das Differential als mechanisches Differential (4a) ausgebildet ist, in dessen Innengehäuse (30) zwei Ausgleichsräder (32) angeordnet sind, die mit mit den beiden Wellen (2a, 3a) verbundenen Antriebsrädern (33, 34) kämmen, und daß die Kupplungsorgane eine Schiebehülse (35) aufweisen, die derart axial verschiebbar auf dem Innengehäuse (30) gelagert ist, daß sie aus einer Stellung, in der an ihr und am Zahnrad (5) angeordnete Kupplungsorgane (39, 40) in Eingriff stehen, in eine entkuppelte Position überführbar sind.

8. Vorrichtung nach Anspruch 7, dadurch gekennzeichnet, daß sie mit zusätzlichen Kupplungsorganen (47) versehen ist, die zum Kuppeln der Schiebehülse (46) mit einem auf einer (2b) der beiden Wellen (2b, 3b) angeordneten Teil (42) dienen, um das Differential zu blockieren.

FIG.1

FIG.2

FIG.3

11
39
44 45
15b 4b
12
2b
41a
3b
8e
14b
43
8
9
42
41
5
46
1
40
47

FIG.4

37 38
35
36
30
32
31